# EUROPEAN PATENT APPLICATION

(11) **EP 2 174 845 A1**
(43) Date of publication of application: **14.04.2010**
(21) Application number: 08764667.5
(22) Date of filing: 26.05.2008
(51) Int. Cl.: B60R 21/276, B60R 21/16

(54) **AIRBAG, AND AIRBAG DEVICE**

(30) Priority: 08.08.2007 JP 2007206944
(71) Applicant: Takata Corporation, Tokyo 107-8508 (JP)
(72) Inventor: KUMAGAI, Masayoshi, Tokyo 1107-8508 (JP)
(74) Representative: Banzer, Hans-Jörg
(86) International application number: PCT/JP2008/059634
(87) International publication number: WO 2009/019923

(57) **Abstract**

[Object] An airbag and an airbag device that can reduce pressure loss during inflation and extension of the airbag and can efficiently exert an impact absorbing force of the airbag device according to a physical size of an occupant are provided.

[Solving Means] An airbag device of the present invention is provided with a gas generator 1 for generating gas under a predetermined condition, an airbag 2 connected to the gas generator 1 and inflated and extended, and a retainer 3 for containing the airbag 2, the airbag 2 is provided with a projection portion 4 forming a portion projecting to the outside on a part of the airbag 2, a vent hole 5 formed on the projection portion 4, a strap 6 with one end connected to the projection portion 4 and the other end connected to the inside of the airbag 2, and an insertion hole 7 for guiding the other end of the strap 6 into the inside of the airbag 2, and said vent hole 5 is arranged in the projection portion 4 in an area where the projection portion 4 and the airbag 2 do not overlap each other when the projection portion 4 is pulled by the strap 6.

## Description

### Technical Field

The present invention relates to an airbag and an airbag device mounted on a vehicle such as an automobile and particularly to an airbag and an airbag device characterized by opening / closing means of a vent hole of the airbag.

### Background Art

It has become general to mount an airbag device for absorbing an impact caused in an occupant by inflating and extending an airbag in a car at a collision, rapid deceleration and the like on a vehicle such as an automobile. As such an airbag device, various types have been developed / employed such as a driver airbag device installed inside a steering wheel, a passenger airbag device installed inside an instrument panel, a side airbag device installed inside a vehicle side portion or a seat, a curtain airbag device installed inside an upper part of a door, a knee airbag device corresponding to a knee portion of a passenger, a pedestrian airbag installed under a hood and the like. These types of an airbag device is usually provided with a gas generator for generating gas under a predetermined condition, an airbag connected to the gas generator and inflated and extended, and a retainer for containing the airbag. Also, on an outer shell forming the airbag, a discharge port called a vent hole might be formed. This vent hole has a function to prevent an internal pressure of the airbag from becoming excessively high or to alleviate an impact by discharging gas inside the airbag when an occupant touches the airbag.

In the airbag device in which such a vent hole is formed, there has been a problem that pressure loss is large since the gas is discharged through the vent hole during inflation and extension of the airbag. In order to solve this problem, those described in Patent Document 1 and Patent Document 2, for example, have been already proposed.

An airbag device described in Patent Document 1 has a strap with one end fastened to an inner peripheral face of a ceiling portion of an airbag and the other end inserted from the inner peripheral face side to an outer peripheral face side of the airbag in the vicinity of the vent hole and fastened to a peripheral edge portion of the vent hole so as to block the vent hole. This strap is pulled and acts to block the vent hole during the inflation and extension of the airbag and is loosened and acts to open the vent hole when the occupant touches the airbag.

An airbag device described in Patent Document 2 discloses a device (as shown in FIGs. 11(A) and 11(B), for example) in which a discharge tube is connected to an outer shell of an airbag in addition to a device (as shown in FIG. 5, for example) with a configuration similar to the one described in Patent Document 1. This discharge tube is pulled to the inside of the airbag by a strap, and when an anchor fixing the strap is released, the discharge tube is opened toward the outside of the airbag so as to act as a vent hole.
[Patent Document 1] Japanese Unexamined Patent Application Publication No. 6-127330
[Patent Document 2] US6,648,371B2

### Disclosure of Invention

### Problems to be Solved by the Invention

One of objects of the present invention is to reduce pressure loss during inflation and extension of an airbag as in Patent Document 1 and Patent Document 2 and to provide an airbag and an airbag device with a configuration different from those disclosed in Patent Document 1 and Patent Document 2.

In order to efficiently exert an impact absorbing force of an airbag device, it is necessary to inflate / extend an airbag according to a physical size (particularly a weight) of an occupant and to discharge gas in the airbag. In the case of an occupant with a large physical size and a heavy weight, for example, since a load at a collision against the airbag is large, an internal pressure of the airbag needs to be made high, and an amount of gas discharged through the vent hole also needs to be reduced. On the other hand, in the case of an occupant with a small physical size and a light weight, since a load at a collision against the airbag is small, the airbag internal pressure needs to be lowered and an amount of gas discharged from the vent hole also needs to be increased. Thus, there is an airbag device in which the gas generator for supplying gas into the airbag is constructed in two stages such that the gas generator on the first stage is operated for the occupant with a light weight and the both gas generators are operated for the occupant with a heavy weight. However, regarding the discharge of the gas in the airbag, a diameter of the vent hole is designed so as to be able to handle both cases as a compromise.

That is, another object of the present invention is to provide an airbag and an airbag device that can efficiently exert an impact absorbing force of the airbag device according to a physical size of an occupant.

### Means for Solving the Problems

According to the present invention, in an airbag which is inflated and extended by supply of gas into the inside, the airbag is provided having a projection portion forming a portion projecting to the outside at a part of the airbag, a vent hole formed at the projection portion, and a strap with one end connected to the projection portion and the other end connected to a constituent component or a mounting component of the airbag, **characterized in that** the vent hole is arranged at the projection portion in an area where the projection portion and the airbag do not overlap each other when the projection portion is pulled by the strap.

The vent hole is preferably configured such that the hole is closed by a tension of the strap and opened by a pressure of the gas flowing into the projection portion when the strap is loosened. The vent hole may be formed on a face opposite the area where the projection portion and the airbag overlap each other when the projection portion is pulled by the strap or may be configured by a cut-out portion formed in a pulling direction of the strap.

The projection portion is preferably configured so as to stand up when the gas flows in from the airbag and to increase a capacity of the airbag. Also, the projection portion has a first panel where the vent hole is formed and a second panel connected to the first panel and may be formed by sewing the first panel and the second panel into a mounting hole formed in the airbag.

An insertion hole for guiding the other end of the strap into the inside of the airbag may be formed in an outer face of the airbag, and an insertion portion for guiding the other end of the strap may be formed in an inner face of the airbag.

The airbag has a left airbag section inflated and extended on the left side of an occupant and a right airbag section inflated and extended on the right side of the occupant, and the vent hole may be formed in each of the left airbag section and the right airbag section. Also, the airbag may have a second vent hole formed at a location different from that of the vent hole.

The constituent component is any one of an outer panel forming the airbag, a tether arranged in the airbag or an inner panel arranged in the airbag, for example. Also, the mounting component is any one of a retainer for containing the airbag, a back plate connected to the retainer or a cover connected to the retainer, for example.

Also, according to the present invention, in an airbag device provided with a gas generator for generating gas under a predetermined condition, an airbag connected to the gas generator and inflated and extended, and a retainer for containing the airbag, an airbag device is provided, **characterized in that** the airbag has a projection portion forming a portion projecting outward at a part of the airbag, a vent hole formed in the projection portion, and a strap with one end connected to the projection portion and the other end connected to a constituent component or a mounting component of the airbag, and the vent hole is arranged in an area where the projection portion and the airbag do not overlap each other when the projection portion is pulled by the strap.

The vent hole is preferably configured such that the hole is closed by a tension of the strap and is opened by a pressure of the gas flowing into the projection portion when the strap is loosened. For example, the vent hole is configured by a cut-out portion formed in the pulling direction of the strap.

The projection portion is preferably configured so as to stand up when the gas flows in from the airbag and to increase the capacity of the airbag. The projection portion has a first panel in which the vent hole is formed and a second panel connected to the first panel and may be formed by sewing the first panel and the second panel to a mounting hole formed in the airbag.

An insertion hole for guiding the other end of the strap into the inside of the airbag may be formed in an outer face of the airbag, and an insertion portion for guiding the other end of the strap may be formed in an inner face of the airbag.

The airbag has a left airbag section inflated and extended on the left side of the occupant and a right airbag section inflated and extended on the right side of the occupant, and the vent hole may be formed in each of the left airbag section and the right airbag section. Also, the airbag may have a second vent hole formed at a location different from that of the vent hole.

The constituent component is any one of an outer panel forming the airbag, a tether arranged in the airbag or an inner panel arranged in the airbag, for example. Also, the mounting component is any one of a retainer for containing the airbag, a back plate connected to the retainer or a cover connected to the retainer, for example.

The airbag device may be provided with a strap holding device that can keep a length of the strap constant and can release the strap and a controller for transmitting a release signal for releasing the strap to the strap holding device.

The controller may be configured to transmit the release signal if the occupant touches the airbag or if the gas generator is operated if a weight of the occupant is lighter than a predetermined reference value. Also, the controller may be configured not to transmit the release signal if the airbag has the second vent hole and the weight of the occupant is heavier than the predetermined reference value. Also, the controller may be so configured that the gas generator has a first gas generator and a second gas generator and the controller transmits the release signal substantially at the same time when only the first gas generator is operated. Moreover, the controller may be so configured that the airbag has the second vent hole, the gas generator has the first gas generator and the second gas generator, and the controller does not transmit the release signal if the first gas generator and the second gas generator are both operated.

The strap holding device may be constituted by a cap capable of engagement with an engagement hole formed in the strap, a holder that can fix the cap, a releasing device connected to the holder and capable of releasing fixation of the cap, and a connector for receiving a release signal for operating the releasing device from the controller. Here, the releasing device may be configured by a gas generator. Advantages

According to the above-mentioned airbag and the airbag device of the present invention, by forming a projection portion on the airbag, a capacity of the airbag can be increased in a stepped manner, and an impact absorbing force can be effectively exerted. Also, by arranging the vent hole on the projection portion in an area where the airbag and the projection portion do not overlap each other, a discharge amount of the gas from the vent hole can be reduced by pulling the strap, and pressure loss during inflation and extension of the airbag can be reduced. Also, the gas discharged from the vent hole can be prevented from directly being injected to the surface of the airbag.

By configuring such that the vent hole is opened / closed by intensity of tension of the strap, the discharge amount of the gas from the vent hole can be easily adjusted, and the impact absorbing force of the airbag device can be adjusted according to the physical size of the occupant. Also, by configuring the vent hole by a cut-out portion formed in the pulling direction of the strap, it can be configured such that when the strap is pulled, the cut-out portion presses each other so as to close the vent hole, while if the strap is loosened, the cut-out portion is pushed open by the inflow gas in the projection portion so as to open the vent hole.

By configuring such that the projection portion is stood up by having the gas flow in from the airbag, the projection portion can be inflated and extended following pressure fluctuation in the airbag if the occupant touches the airbag or the strap is loosened, by which the capacity of the airbag can be increased, and the impact absorbing force can be exerted in a stepped manner. Also, by configuring the projection portion by the first panel and the second panel and by mounting the portion onto the airbag, the projection portion provided with the vent hole can be easily formed on the airbag. Moreover, by forming the insertion hole or insertion portion in the airbag, the strap can be guided to a predetermined connection position.

By applying the present invention to the airbag having the left airbag section and the right airbag section (so-called twin airbag), the gas in the airbag can be effectively discharged even if the airbag is a twin airbag.

By forming the second vent hole, the gas discharge amount in the airbag can be easily adjusted by opening / closing of the vent hole and the second vent hole, and the impact absorbing force of the airbag device can be effectively exerted according to the physical size of the occupant. Also, by connecting the strap to the constituent component or the mounting component of the airbag, an area closing the vent hole can be easily formed.

Also, according to the above-mentioned airbag device of the present invention, by providing the strap holding device and the controller, the strap can be released at arbitrary timing and the gas discharge function of the vent hole can be exerted.

By setting the timing to transmit the release signal from the controller as the time when the occupant touches the airbag, the gas in the airbag can be discharged at the same time when the occupant touches the airbag, and the impact absorbing force can be effectively exerted while pressure loss during inflation and extension of the airbag is reduced. Also, by setting the timing to transmit the release signal from the controller as the time when the gas generator of the airbag device is operated if the weight of the occupant is light, the internal pressure of the airbag and the gas discharge amount can be made suitable for the occupant with a light weight, and the impact absorbing force of the airbag device can be efficiently exerted. Also, by providing the second vent hole in the airbag and by configuring such that the controller does not transmit the release signal if the weight of the occupant is heavy, the internal pressure of the airbag and the gas discharge amount can be made suitable for the occupant with a heavy weight, and the impact absorbing force of the airbag device can be efficiently exerted.

If the gas generator of the airbag device has both the first gas generator and the second gas generator, by setting such that the controller transmits the release signal if only the first gas generator is operated, the internal pressure of the airbag and the gas discharge amount can be made suitable for the occupant with a light weight, and the impact absorbing force of the airbag device can be efficiently exerted. Also, if the gas generator of the airbag device has both the first gas generator and the second gas generator and the airbag has the second vent hole, by setting such that the controller does not transmit the release signal if the first gas generator and the second gas generator are both operated, the internal pressure of the airbag and the gas discharge amount can be made suitable for the occupant with a heavy weight, and the impact absorbing force of the airbag device can be efficiently exerted.

By configuring the strap holding device by the cap, the holder, the releasing device, and the connector, the strap can be released at arbitrary timing with a simple structure, the capacity of the airbag can be increased, and the gas discharge function of the vent hole can be exerted. Also, by configuring the releasing device by the gas generator, the strap holding device can be easily manufactured, and a size of the strap holding device can be reduced.

### Best Modes for Carrying Out the Invention

An embodiment of the present invention will be described below using Figs. 1 to 16. Here, Figs. 1 are explanatory diagrams illustrating a first embodiment of an airbag device according to the present invention, in which (A) shows a state in which a vent hole is closed, and (B) shows a state in which the vent hole is opened. Figs. 2 are enlarged views of a projection portion, in which (A) shows a state in which a vent hole is opened, and (B) shows a state in which the vent hole is closed. Figs. 3 are diagrams illustrating variations of the first embodiment, in which (A) shows a first variation, (B) shows a second variation, and (C) shows a third variation.

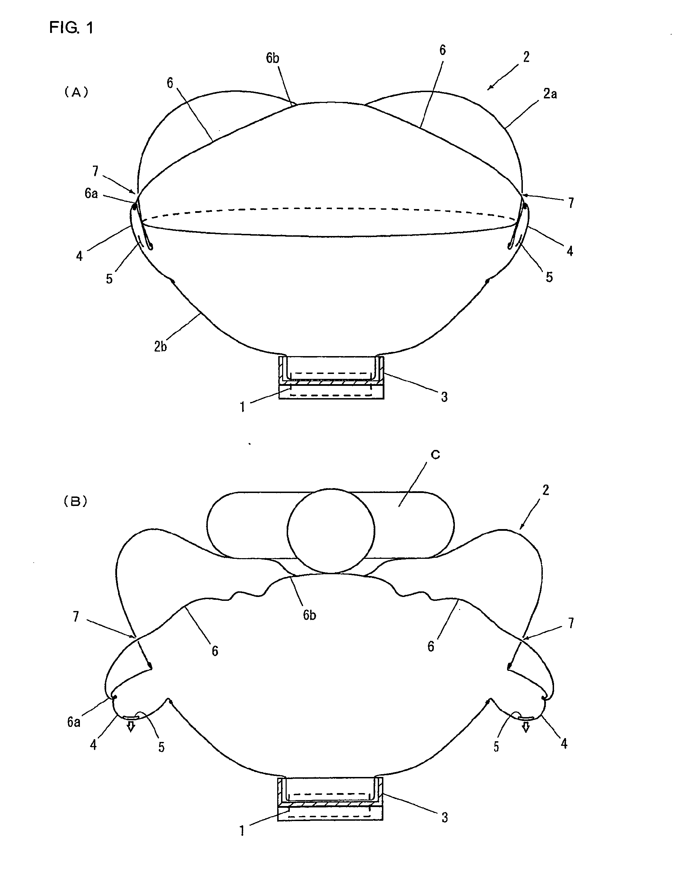

The airbag device shown in Figs. 1(A) and 1(B) is provided with a gas generator 1 for generating gas under a predetermined condition, an airbag 2 connected to the gas generator 1 and inflated and extended, and a retainer 3 for containing the airbag 2, and the airbag 2 is provided with a projection portion 4 forming a portion projecting to the outside on a part of the airbag 2, a vent hole 5 formed in the projection portion 4, a strap 6 with one end connected to the projection portion 4 and the other end connected to the inside of the airbag 2, and an insertion hole 7 for guiding the other end of the strap 6 into the airbag 2, in which the vent hole 5 is arranged in the projection portion 4 in an area where the projection portion 4 and the airbag 2 do not overlap each other when the projection portion 4 is pulled by the strap 6. The airbag device shown in this figure illustrates a case of a passenger airbag device.

The gas generator 1 is a component generally called an inflator, which has a substantially columnar outer shape and a gas injection port formed on a side peripheral face of a distal end portion included by the airbag 2. Also, the gas generator 1 is connected to an ECU (electronic control unit), not shown, and is controlled on the basis of a measured value of an acceleration sensor or the like. If the ECU detects or predicts a collision or a rapid deceleration of a vehicle, the gas generator 1 is ignited by a spark current from the ECU, a chemical stored inside the gas generator 1 is burned so as to generate gas, and the gas is supplied to the airbag 2. Also, in order to distinguish a case in which a physical size of an occupant is large or a weight is heavy from a case in which the physical size of the occupant is small or the weight is light and to act an impact absorbing force according to the physical size difference by changing an internal pressure of the airbag 2, the gas generator 1 might be configured in a two-stage type (a first gas generator and a second gas generator). In the case of the two-stage type gas generator 1 employed, if the physical size of the occupant is large or the weight is heavy, the first gas generator on a first stage and the second gas generator on a second stage are both operated at the same time, while if the physical size of the occupant is small or the weight is light, only the first gas generator on the first stage is operated. The physical size difference of the occupant is determined from a seat load sensor, a seat position sensor and the like connected to the ECU.

The airbag 2 is generally constituted by a front panel 2a arranged on an occupant side and a rear panel 2b arranged on a vehicle structure (instrument panel or the like) side in inflation and extension. The front panel 2a and the rear panel 2b form substantially a disk shape, respectively, and their peripheral edge portions are sewn from the inside. Therefore, the front panel 2a and the rear panel 2b form an outer shell (outer panel), which is a major internal-pressure holding element of the airbag 2. Though not shown, a tether shaping the shape of the airbag 2 or an inner panel dividing the inside into a plurality of sections communicating with each other may be disposed inside the airbag 2. Here, components constituting or being connected to the airbag 2 such as the outer panels (the front panel 2a and the rear panel 2b, for example) forming the outer shell of the airbag 2, the tether, and the inner panel are called constituent components.

The airbag 2 shown in Figs. 1(A) and 1(B) has the projection portion 4 forming a portion projecting to the outside, and the vent hole 5 is formed in the projection portion 4. The projection portion 4 is preferably disposed on the rear panel 2b of the airbag 2 as shown in Fig. 1. It is needless to say that the projection portion 4 may be disposed on the front panel 2a depending on the shape of the airbag 2. Here, it is only necessary that the vent hole 5 is provided in an area where the projection portion 4 and the surface of the airbag 2 do not overlap each other. That is, as shown in Fig. 1(A), the vent hole 5 is formed at a portion forming a part of the outer surface of the airbag 2 when the projection portion 4 is pulled by the strap 6. The number and arrangement locations of the projection portions 4 may be arbitrarily set and not limited to those illustrated in the figure.

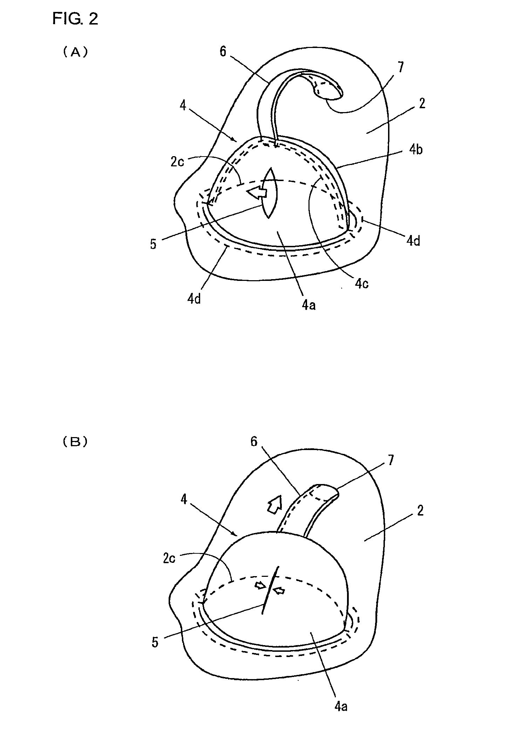

A structure of the projection portion 4 will be described referring to Fig. 2. As shown in Fig. 2(A), the projection portion 4 has a first panel 4a in which the vent hole 5 is formed and a second panel 4b connected to the first panel 4a, and the first panel 4a and the second panel 4b are sewn to a mounting hole 2c formed in the airbag 2. Specifically, the first panel 4a and the second panel 4b are sewn together by overlapping seam allowances 4c formed on the respective peripheral edge portions. Also, the first panel 4a and the second panel 4b are sewn by overlapping seam allowances 4d formed on the respective hem portions and a peripheral edge portion of the mounting hole 2c with each other. Therefore, an inside space of the projection portion 4 formed by the first panel 4a and the second panel 4b communicates with the airbag 2 through the mounting hole 2c. Also, the strap 6 is sandwiched by sewn portion on the peripheral edge portions of the first panel 4a and the second panel 4b and sewn together. At this time, a sewn position of the strap 6 is preferably close to a top portion of the projection portion 4 so as to press the first panel 4a in which the vent hole 5 is formed to the surface of the airbag 2 with a good balance. The vent hole 5 shown in Figs. 2(A) and 2(B) is constituted by a cut-out portion formed in a pulling direction of the strap 6.

As shown in Fig. 2(B), if the airbag 2 is inflated and the strap 6 is pulled in the arrow direction, for example, a part of the projection portion 4 (here, the second panel 4b side) is pressed onto the surface of the airbag 2, and the inflation and extension of the projection portion 4 is suppressed. Also, by means of a tension of the strap 6, base cloths on the both sides of the cut-out portion constituting the vent hole 5 press each other so as to close the vent hole 5. If the occupant touches the airbag 2 or intentionally loosens the strap 6, the tension of the strap 6 is lowered, the gas flows into the projection portion 4, and the internal pressure in the projection portion 4 is increased, by which the projection portion 4 stands up on the surface of the airbag 2 and can increase the capacity of the airbag 2 as shown in Fig. 2(A). If the pressure inside the projection portion 4 is further increased, the base cloths on the both sides of the cut-out portion constituting the vent hole 5 tend to separate from each other so as to open the vent hole 5, by which the gas can be discharged from the gap. The structures of the projection portion 4 and the vent hole 5 shown in Figs. 2(A) and 2(B) are mere examples and are not limited to these structures.

The airbag 2 shown in Figs. 1(A) and 1(B) has an insertion hole 7 for guiding the strap 6 connected to the projection portion 4 into the inside. Here, the strap 6 is constituted by a cord material or a woven cloth material and constituted by a tether generally used in the airbag device or webbing used in a seatbelt device, for example. The insertion hole 7 may have any size / shape through which the strap 6 can be inserted and may be a hole shape or a slit shape. With regard to the strap 6, one end 6a is connected to the vicinity of a top portion of the projection portion 4, while the other end 6b is guided into the inside of the airbag 2 through the insertion hole 7 and connected to the vicinity of the top portion on the inner face of the airbag 2, for example.

Subsequently, an action of the airbag device of the first embodiment will be described. As shown in Fig. 1(A), when the gas generator 1 is operated and the airbag 2 is inflated and extended, with movement of the top portion of the airbag 2, each strap 6 is brought into a pulled state. Then, the projection portion 4 is pulled by the tension of each strap 6 and maintains a crushed state and acts so as to close the vent hole 5. Therefore, leakage of the gas during inflation and extension of the airbag 2 can be reduced. Also, as shown in Fig. 1(B), when an occupant C touches the airbag 2, the top portion of the airbag 2 is moved to the retainer 3 side, by which each strap 6 is brought into a loose state, and the tension of the strap 6 is lowered. Also, at the same time, the gas flows into each of the projection portion 4 by pressure fluctuation caused by deformation of the airbag 2, and the internal pressure is raised. By means of these actions, each projection portion 4 stands up on the surface of the airbag 2, by which the capacity of the airbag 2 can be increased. If the internal pressure inside each projection portion 4 is further increased, each vent hole 5 is opened, and the gas in the airbag 2 can be discharged.

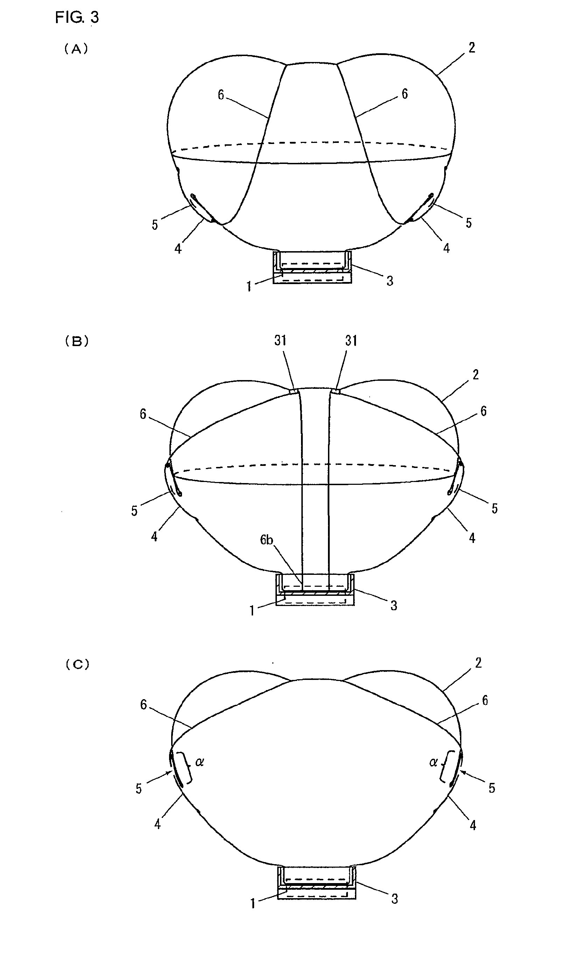

Subsequently, variations of the airbag device of the above-mentioned first embodiment will be described. In each of Figs. 3(A) to 3(C), the same reference numerals are given to the same constituent components as those in the first embodiment, and duplicated explanation will be omitted.

A first variation shown in Fig. 3(A) is an example in which a direction of the projection portion 4 is changed.
In the first embodiment shown in Fig. 1(A), the top portion of the projection portion 4 is pulled toward the occupant C side, but in the first variation shown in Fig. 3(A), the top portion of the projection portion 4 is pulled from the retainer 3 side toward the top portion of the airbag 2.
Even if the direction of the projection portion 4 is changed as above, the same effect as in the first embodiment is exerted.

A second variation shown in Fig. 3(B) is an example in which a connection method of the strap 6 is changed. In the second variation shown in Fig. 3(B), insertion portions 31 and 31 for guiding the other end 6b of the strap 6 is formed in the inner face close to the top portion of the airbag 2, and the other end 6b of the strap 6 is connected to the inner face of the airbag 2 close to the retainer 3. The insertion portion 31 is constituted by a plate-shaped woven cloth material, and by sewing the both ends to the airbag 2, a gap through which the strap 6 is inserted is formed in an intermediate portion thereof. The other end 6b of the strap 6 may be connected to another tether, the inner panel and the like disposed on the inner face of the airbag 2, not limited to the illustrated location. In this second variation, if the top portion of the airbag 2 is moved toward the retainer 3 side due to contact by the occupant, the strap 6 can be loosened by a length approximately twice of the movement amount, by which inflation and extension of the projection portion 4 is given allowance.

A third variation shown in Fig. 3(C) is an example in which arrangement of the vent hole 5 is changed. In the third variation shown in Fig. 3(C), the vent hole 5 is formed on a face opposite an area α where the projection portion 4 and the airbag 2 overlap each other when the projection portion 4 is pulled by the strap 6. By constituting such that when the airbag 2 is inflated and extended, the projection portion 4 is brought into close contact with the surface of the airbag 2 by increasing the tension acting on the projection portion 4 through adjustment of a length of the strap 6 or the like, sealing performance of the vent hole 5 can be ensured better. Also, in this third variation, a shape of the vent hole 5 can be changed to an opening portion in a circular hole shape, a square hole shape and the like instead of the cut-out portion shown in Figs. 2(A) and 2(B).

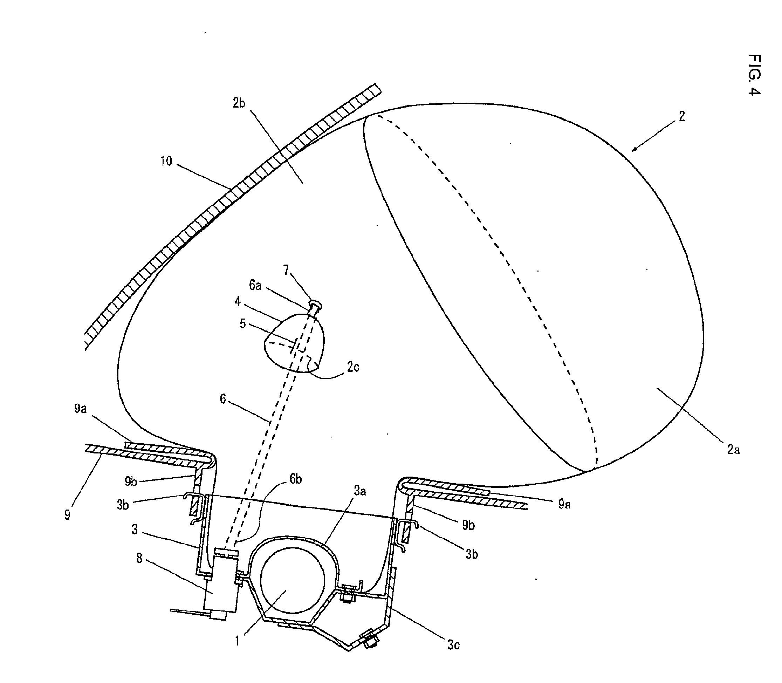

Subsequently, a second embodiment of an airbag device according to the present invention will be described referring to Figs. 4 to 7. Here, Fig. 4 is a side sectional view illustrating the second embodiment of the airbag device according to the present invention. In Fig. 4, the same reference numerals are given to the same constituent components as those in the first embodiment, and duplicated explanation will be omitted.

The airbag device shown in Fig. 4 is a passenger airbag device similar to the first embodiment and is stored inside an instrument panel 9 arranged on a front face of a passenger seat. The airbag 2 starts inflation and extension when gas is supplied into the inside through operation of the gas generator 1 and is inflated and extended in the car interior while breaking a door portion 9a of the instrument panel 9 and touching a front windshield 10. The retainer 3 is supported by a hook 3b hooked in an engagement hole of a flange portion 9b formed on the instrument panel 9. Also, the retainer 3 is fixed to a car-interior structure in the instrument panel 9 by a fixing fitting 3c. Also, the gas generator 1 is contained and fixed in a space formed by the outer profile of the retainer 3 and a cover 3a fixed to the retainer 3. In a space in an upper part of the cover 3a in the retainer 3, the airbag 2 is contained. The gas generator 1 might be fixed to the retainer 3 by interposing a back plate (not shown) between the gas generator 1 and the retainer 3. Here, components relating to mounting of the airbag 2 such as the retainer 3, the back plate, the cover 3a and the like are called mounting components. This configuration is an example of the passenger airbag device, and the airbag device of the present invention is not limited to this configuration.

The second embodiment shown in Fig. 4 illustrates a case in which the other end 6b of the strap 6 is connected to a strap holding device 8 that can keep the length of the strap 6 constant and can release the strap 6. Since the strap holding device 8 is fixed to the retainer 3, it means that the strap 6 is connected to the retainer 3 through the strap holding device 8. Finally, the other end 6b of the strap 6 may be connected to the inner face of the airbag 2, as will be described later.

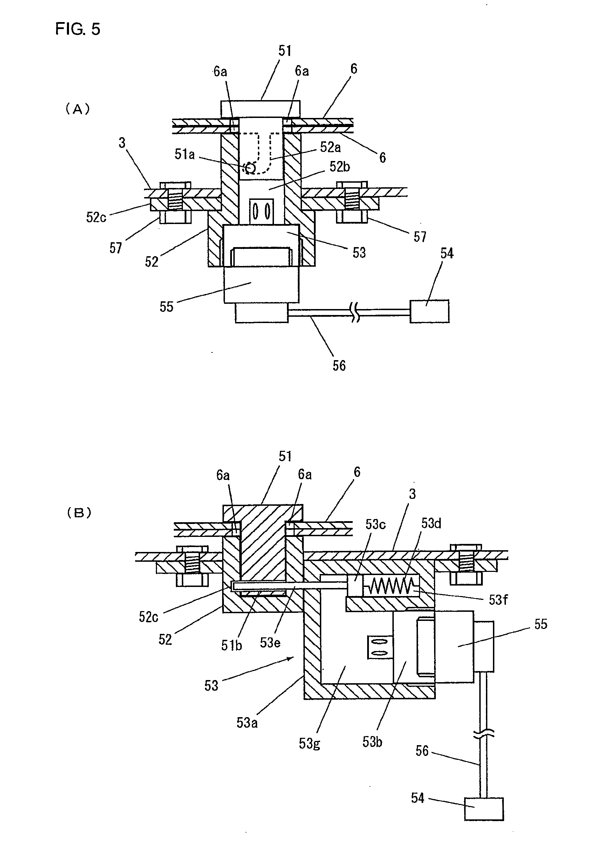

Here, a structure of the strap holding device 8 will be described referring to Fig. 5. Figs. 5 are outline sectional views illustrating the strap holding device 8, in which (A) shows a pressurization type and (B) shows a piston type. The strap holding device 8 shown in Figs. 5(A) and 5(B) is constituted by a cap 51 that can be engaged in the engagement hole 6c formed in the strap 6, a holder 52 that can fix the cap 51, a releasing device 53 connected to the holder 52 and capable of releasing fixation of the cap 51, and a connector 55 for receiving a release signal for operating the releasing device 53 from a controller 54. The controller 54 may be the ECU (electronic control unit) controlling the gas generator 1 or may be exclusively for the strap holding device 8.

The strap holding device 8 shown in Fig. 5(A) has a projection 51a formed on an outer peripheral face of the cap 51 and a groove 52a substantially in the L-shape and formed on an inner peripheral face of the holder 52 and fixes the cap 51 to the holder 52 by engaging the projection 51a with the groove 52a. Also, a micro gas generator (hereinafter referred to as "MGG") constituting the releasing device 53 is embedded inside the holder 52. An inner peripheral face of the holder 52 and an outer peripheral face of the releasing device 53 (MGG) are threaded, respectively, and the releasing device 53 (MGG) is fixed to the holder 52 by screwing them. Also, a stepped portion is formed inside the holder 52, and by bringing the releasing device 53 (MGG) into contact with the stepped portion, a predetermined gap 52b is formed between the cap 51 and the releasing device 53 (MGG). By blowing the gas into this gap 52b through a distal end portion of the releasing device 53 (MGG), the cap 51 is pressurized, the projection 51a is removed from the groove 52a or the projection 51a is sheared so as to release the cap 51 from the holder 52. The strap holding device 8 in which the cap 51 is directly pressurized and released by the releasing device 53 (MGG) as above shall be referred to as the pressurization type.

The MGG is a small-sized gas generator and basically has the same structure as the gas generator 1. That is, the MGG is ignited by a spark current (release signal) from the controller 54, and a chemical stored inside is burned so as to generate gas. The connector 55 is fixed to a dent in a rear end portion of the releasing device 53 (MGG) by pushing-in or screwing and transmits the spark current (release signal) from the controller 54 to the releasing device 53 (MGG). The connector 55 and the controller 54 are electrically connected through a harness 56. A flange portion 52c is formed on an intermediate portion of the holder 52, and by connecting the flange portion 52c and the retainer 3 with a fixing fitting 57 such as a bolt / nut or the like, the holder 52 is fixed to the retainer 3.

The strap holding device 8 shown in Fig. 5(B) has a fixing method of the cap 51 and a structure of the releasing device 53 different from those of the strap holding device 8 shown in Fig. 5(A). The releasing device 53 shown in Fig. 5(B) is constituted by a case 53a connected to the holder 52, an MGG 53b fixed to the case 53a, a piston 53c slidably arranged in the case 53a, a spring 53d connecting the piston 53c and the case 53a, and a pin 53e connected at a distal end of the piston 53c. The piston 53c is contained in a substantially cylindrical cylinder portion 53f formed in the case 53a and is urged in a direction to projecting the pin 53e by an action of the spring 53d. A gap 53g is formed between the MGG 53b and the piston 53c, and the gas of the MGG 53b is supplied to the gap 53g. In the cap 51, a receiving hole 51b through which the pin 53e can be inserted is formed. In an outer peripheral face of the holder 52, an engagement hole 52d for supporting a distal end of the pin 53e inserted through the receiving hole 51b is formed. Therefore, before the gas is supplied to the gap 53g, the cap 52 can be held by the pin 53e. If the gas is supplied to the gap 53g, the gas presses the piston 53c and slides the piston 53c in a direction to pull in the pin 53e, by which the pin 53e is pulled out of the cap 51, and the cap 51 is released. Since the other portions basically have the same configuration as that shown in Fig. 5(A), detailed explanation will be omitted. The strap holding device 8 in which the piston 53c is pressurized by the releasing device 53 (MGG) so as to release the cap 51 is referred to as the piston type.

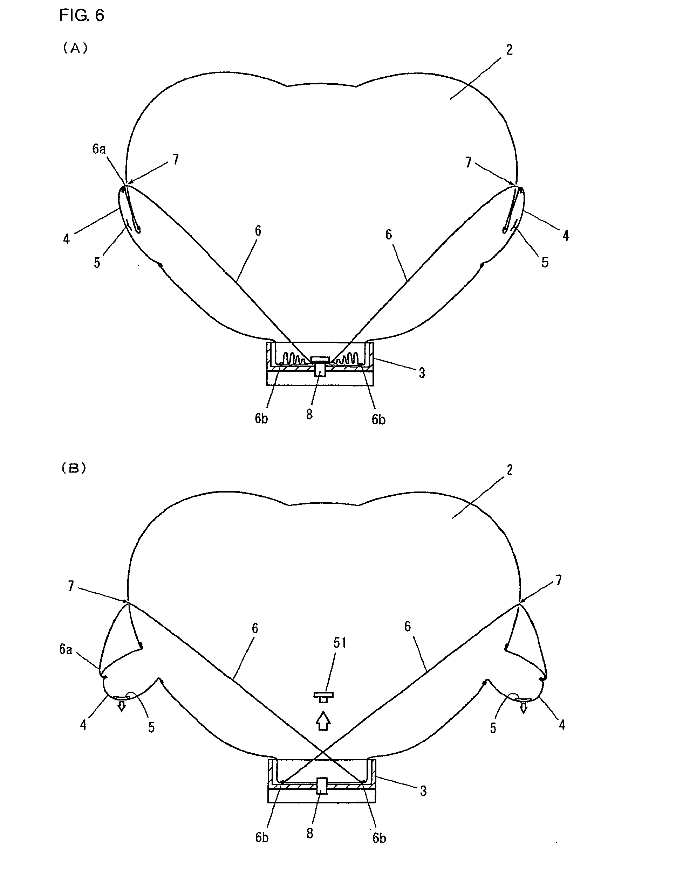

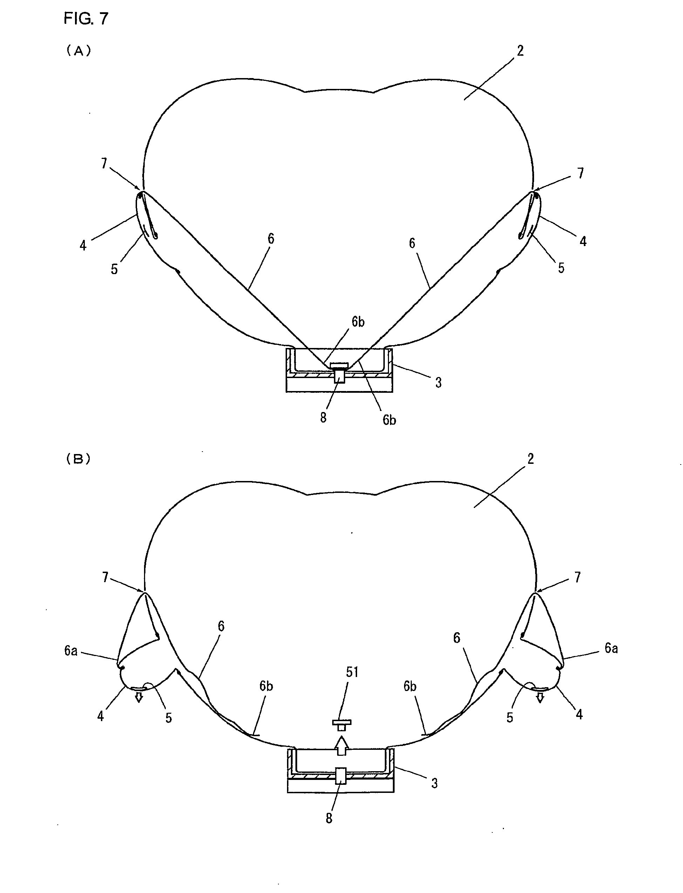

Subsequently, an action of the strap holding device 8 will be described referring to Figs. 6 and 7. Here, Figs. 6 are explanatory diagrams illustrating an action of the strap holding device if an end portion of the strap is fixed to the airbag, in which (A) shows a state in which the vent hole is closed, and (B) shows a state in which the vent hole is opened. Figs. 7 are explanatory diagrams illustrating an action of the strap holding device if the end portion of the strap is connected to the strap holding device, in which (A) shows a state in which the vent hole is closed and (B) shows a state in which the vent hole is opened.

The airbag device shown in Figs. 6(A) and 6(B) has projection portions 4, 4 formed on both right and left sides of the airbag 2. The strap 6 with one end 6a connected to each of the projection portions 4 is guided into the airbag 2 through each insertion hole 7 and connected to the strap holding device 8 and then, the other end 6b is sewn to the inner face of the airbag 2. Between the strap holding device 8 and the other end 6b, looseness (allowance) to such a degree that each projection portion 4 can stand on the airbag 2 when the strap holding device 8 is released so as to release the strap 6 is provided. In each figure, illustration of the gas generator fixed to the retainer 3 is omitted.

As shown in Fig. 6(A), if each vent hole 5 is to be closed, it is only necessary to keep the strap holding device 8 from being operated. With inflation and extension of the airbag 2, each strap 6 is brought into a pulled state by the projection portion 4. If the strap 6 is pulled to the full, the projection portion 4 is pulled by the strap 6 and pressed onto the surface of the airbag 2, and inflation is suppressed. At this time, by pulling of each of the projection portions 4 by the strap 6, each of the vent holes 5 is closed. Therefore, only by keeping the length of the strap 6 constant in inflation and extension of the airbag 2, the vent hole 5 can be closed, and discharge of the gas can be suppressed.

Also, as shown in Fig. 6(B), if each vent hole 5 is to be opened, it is only necessary to operate each strap holding device 8 so as to release the strap 6. If the strap holding device 8 is operated so as to release the cap 51, the strap 6 having been engaged with the strap holding device 8 is released. Then, tension pulling the projection portion 4 is lowered, and the internal pressure of the projection portion 4 is raised by the gas flowing into the inside and brought into a standing state on the surface of the airbag 2, by which the capacity of the airbag 2 can be increased. If the internal pressure of the projection portion 4 is further raised, the vent hole 5 is brought into an open state, and the gas in the airbag 2 can be discharged.

In the airbag device shown in Figs. 7(A) and 7(B), the other end 6b of each strap 6 is connected to the strap holding device 8 so that it is not connected to the airbag 2. Since the other portions basically have the same configuration as that shown in Figs. 6(A) and 6(B), detailed explanation will be omitted. As shown in Fig. 7(A), if each vent hole 5 is to be closed, it is only necessary to keep the strap holding device 8 from being operated. Also, as shown in Fig. 7(B), if the vent hole 5 is to be opened, it is only necessary to operate the strap holding device 8 so as to release each strap 6. In this case, since the other end 6b of each strap 6 is not connected to anywhere, tension is lost, the internal pressure in the projection portion 4 is raised by the gas flowing into the inside and brought into a standing state on the surface of the airbag 2, and the capacity of the airbag 2 can be increased. If the internal pressure of the projection portion 4 is further raised, the vent hole 5 is brought into an open state, and the gas in the airbag 2 can be discharged.

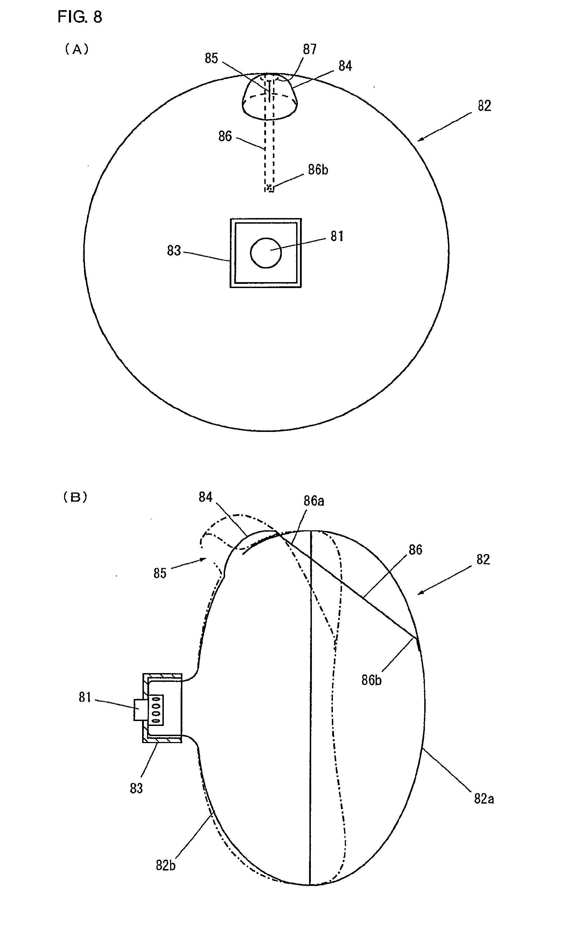

Subsequently, a case in which the present invention is applied to a driver airbag device will be described referring to Fig. 8. Here, Figs. 8 are explanatory diagrams illustrating a third embodiment of an airbag device according to the present invention, in which (A) is a rear view and (B) is a side sectional view. Fig. 8(A) shows a state in which the vent hole is closed, and Fig. 8(B) shows a state in which the vent hole is closed indicated by a solid line and an open state by a one-dot chain line.

The airbag device shown in Figs. 8(A) and 8(B) is provided with a gas generator 81 for generating gas under a predetermined condition, an airbag 82 connected to the gas generator 81 and inflated and extended, and a retainer 83 for containing the airbag 82, and the airbag 82 is provided with a projection portion 84 forming a portion projecting to the outside on a part of the airbag 82, a vent hole 85 formed in the projection portion 84, a strap 86 with one end 86a connected to the projection portion 84 and the other end 86b connected to the inside of the airbag 82, and an insertion hole 87 for guiding the other end 86b of the strap 86 into the inside of the airbag 82, in which the vent hole 85 is arranged in the projection portion 84 in an area where the projection portion 84 and the airbag 82 do not overlap each other when the projection portion 84 is pulled by the strap 86. The airbag 82 is constituted by a front panel 82a arranged on an occupant side and a rear panel 82b arranged on a vehicle structure side, for example. Here, the case in which the projection portion 84 is formed at one spot is described, but the projection portions 84 may be formed at right and left or upper and lower two locations, or the projection portions 84 may be formed at three locations or more. Also, the case in which an end portion 86b of the strap 86 is connected to a top portion of the airbag 82 is illustrated, but an insertion portion may be formed at the top portion of the airbag 82 and the other end 86b of the strap 86 is connected to the vicinity of the retainer 83.

Since the airbag device according to the third embodiment is a driver airbag device, specific shapes of the gas generator, retainer, airbag and the like are different from those of the airbag device in the first embodiment shown in Fig. 1, but the basic configuration as the airbag device is the same, and detailed description of each component will be omitted. The retainer 83 is generally arranged on a steering wheel.

As indicated by a solid line in Fig. 8(B), when the gas generator 81 is operated and the airbag 82 is inflated and extended, each strap 86 is brought into a pulled state by the projection portion 84. If the strap 86 is pulled to the full, the projection portion 84 is pulled by the strap 86 and pressed onto the surface of the airbag 82, and inflation is suppressed. At this time, by pulling of the projection portion 84 by the strap 86, each of the vent holes 85 is closed.

As indicated by a one-dot chain line in Fig. 8(B), when an occupant (not shown) touches the airbag 82, the top portion of the airbag 82 is moved to the retainer 83 side, by which the strap 86 is brought into a loose state, and the tension is lowered. Also, at the same time, the gas flows into the projection portion 84 by pressure fluctuation caused by deformation of the airbag 82, and the internal pressure is raised. By means of these actions, the projection portion 84 stands up on the surface of the airbag 82, by which the capacity of the airbag 82 can be increased. If the internal pressure inside the projection portion 84 is further increased, the vent hole 85 is opened, and the gas in the airbag 82 can be discharged.

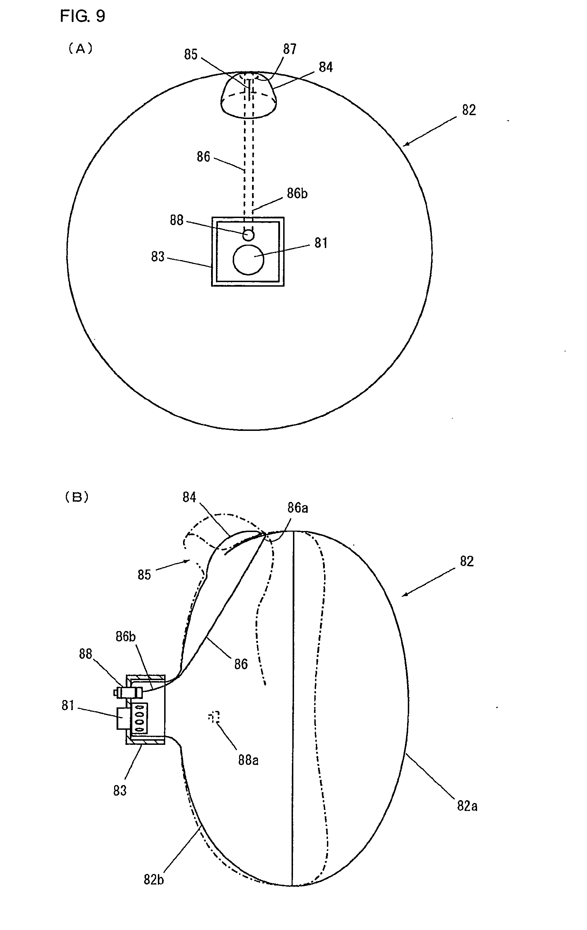

Subsequently, a variation of the airbag device of the above-mentioned third embodiment will be described. Here, Figs. 9 are views illustrating a variation of the third embodiment, in which (A) is a rear view, and (B) is a side sectional view. The same reference numerals are given to the same constituent components as those in the third embodiment in Figs. 9(A) and 9(B), and duplicated description will be omitted.

In the variation of the third embodiment shown in Figs. 9(A) and 9(B), the end portion 86b of the strap 86 is connected to a strap holding device 88 that can keep the length of the strap 86 constant and can release the strap 86. A device similar to the one shown in Fig. 5 can be employed for the strap holding device 88.

Therefore, by holding the strap 86 by the strap holding device 88, inflation of the projection portion 84 can be suppressed, and the vent hole 85 can be closed, while by releasing the cap 88a of the strap holding device 88, the strap 86 can be released, by which inflation of the projection portion 84 and opening of the vent hole 85 can be promoted.

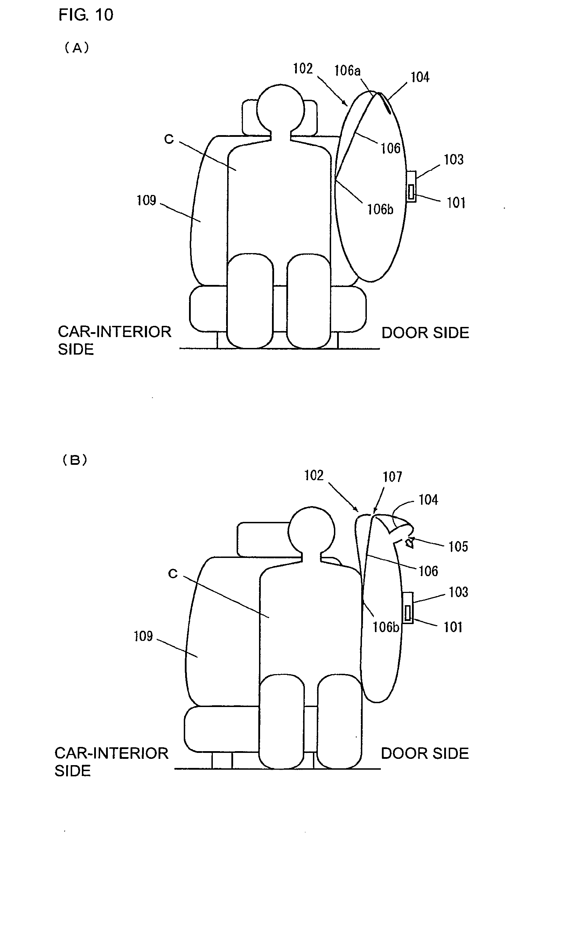

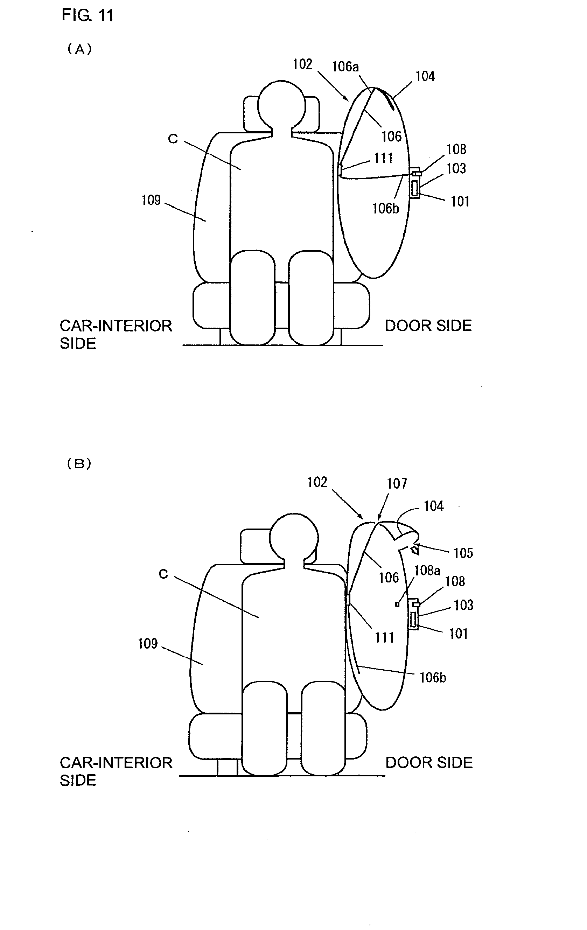

Subsequently, a case in which the present invention is applied to an airbag device for side collision will be described referring to Figs. 10 and 11. Here, Figs. 10 are outline sectional views illustrating a fourth embodiment of an airbag device according to the present invention, in which (A) shows a state in which a vent hole is closed, and (B) shows a state in which the vent hole is opened.

The airbag device shown in Figs. 10(A) and 10(B) is provided with a gas generator 101 for generating gas under a predetermined condition, an airbag 102 connected to the gas generator 101 and inflated and extended, and a retainer 103 for containing the airbag 102, and the airbag 102 is provided with a projection portion 104 forming a portion projecting to the outside on a part of the airbag 102, a vent hole 105 formed in the projection portion 104, a strap 106 with one end 106a connected to the inside of the projection portion 104 and the other end 106b connected to the inside of the airbag 102, and an insertion hole 107 for guiding the other end 106b of the strap 106 into the airbag 102, in which the vent hole 105 is arranged in the projection portion 104 in an area where the projection portion 104 and the airbag 102 do not overlap each other when the projection portion 104 is pulled by the strap 106. Here, the case in which the projection portion 104 is formed at one location is described, but the projection portions 104 may be formed at plural locations. Also, the case in which the end portion 106b of the strap 106 is connected to a top portion of the airbag 102 is illustrated, but an insertion portion may be formed at the top portion of the airbag 102 so that the other end 106b of the strap 106 is connected to the vicinity of the retainer 103.

Since the airbag device according to the fourth embodiment is an airbag device for side collision, specific shapes of the gas generator, retainer, airbag and the like are different from those of the airbag device in the first embodiment shown in Fig. 1, but the basic configuration as the airbag device is the same, and detailed description of each component will be omitted. The retainer 103 is generally arranged on a car-body door portion or a seat side face portion.

As shown in Fig. 10(A), when the gas generator 101 is operated and the airbag 102 is inflated and extended, the strap 106 is brought into a pulled state with movement of the top portion of the airbag 102. If the strap 106 is pulled to the full, the projection portion 104 is pulled by the strap 106 and pressed onto the surface of the airbag 102, and inflation is suppressed. At this time, by pulling of the projection portions 104 by the strap 106, each of the vent holes 105 is closed. Here, the occupant C has been seated on a seat 109, and Fig. 10(A) shows a state before the occupant C collides against the airbag 102. The occupant C fastens a seat belt in general, but illustration is omitted here.

As shown in Fig. 10(B), when the occupant C touches the airbag 102, the top portion of the airbag 102 is moved to the retainer 103 side, by which the strap 106 is brought into a loose state, and the tension is lowered. Also, at the same time, the gas flows into the projection portion 104 by pressure fluctuation caused by deformation of the airbag 102, and the internal pressure is raised. By means of these actions, the projection portion 104 stands up on the surface of the airbag 102, by which the capacity of the airbag 102 can be increased. If the internal pressure inside the projection portion 104 is further increased, the vent hole 105 is opened, and the gas in the airbag 102 can be discharged.

Subsequently, a variation of the airbag device of the above-mentioned fourth embodiment will be described. Here, Figs. 11 are views illustrating a variation of the fourth embodiment, in which (A) shows a state in which a vent hole is closed, and (B) shows a state in which the vent hole is opened. The same reference numerals are given to the same constituent components as those in the fourth embodiment in Figs. 11(A) and 11(B), and duplicated description will be omitted.

In the variation of the fourth embodiment shown in Figs. 11(A) and 11(B), the end portion 106b of the strap 106 is connected to a strap holding device 108 that can keep the length of the strap 106 constant and can release the strap 106. A device similar to the one shown in Fig. 5 can be employed for the strap holding device 108. Though an insertion portion 111 is formed at a top portion of the airbag 102 here and the other end 106b of the strap 106 is inserted through the insertion portion 111 and then, connected to the strap holding device 108, the insertion portion 111 may be omitted and the other end 106b of the strap 106 may be directly connected to the strap holding device 108.

Therefore, by holding the strap 106 by the strap holding device 108, inflation of the projection portion 104 can be suppressed, and the vent hole 105 can be closed, while by releasing a cap 108a of the strap holding device 108, the strap 106 can be released, by which inflation of the projection portion 104 and opening of the vent hole 105 can be promoted.

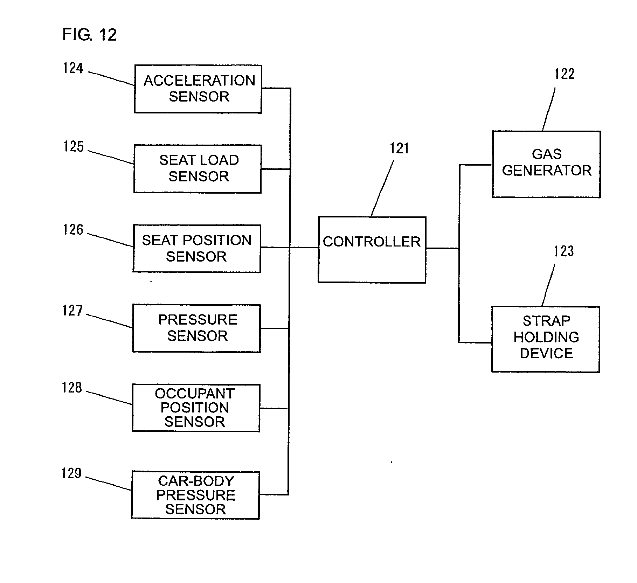

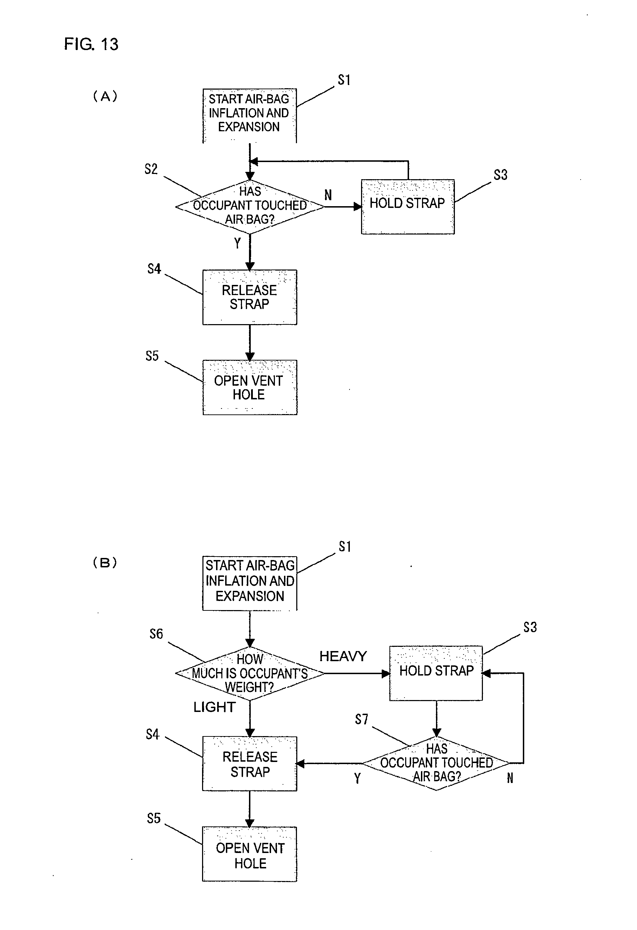

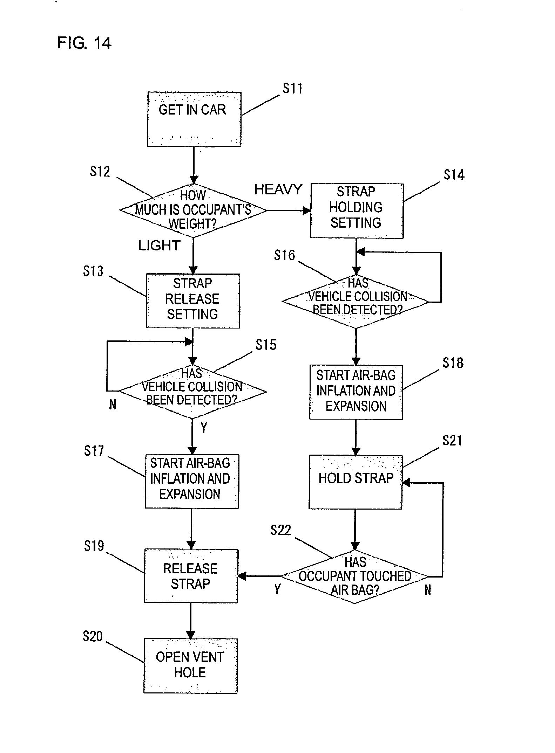

Subsequently, a configuration and an action of the controller connected to the strap holding device will be described referring to Figs. 12 to 14. Here, Fig. 12 is a diagram illustrating a configuration of the controller of the airbag device according to the present invention. Figs. 13 are flowcharts illustrating an action of the controller if the gas generator of the airbag device has a single-stage configuration, in which (A) is a flowchart of a case in which the vent hole is opened if the occupant touches the airbag, and (B) is a flowchart of a case in which the vent hole is opened / closed according to a weight of the occupant. Fig. 14 is a flowchart of a case in which an operation of the gas generator of the airbag device is performed in conjunction with an operation of the strap holding device.

As shown in Fig. 12, a controller 121 of the present invention is electrically connected to a gas generator 122 and a strap holding device 123, and the gas generator 122 and the strap holding device 123 are operated on the basis of a signal transmitted by the controller 121. This controller 121 corresponds to a controller 54 shown in Fig. 5, and the ECU (electronic control unit) plays the role in general. Also, the gas generator 122 is a gas generator of the airbag device and corresponds to the gas generators 1, 81, and 101 shown in Fig. 1 and the like. The strap holding device 123 corresponds to the strap holding devices 8, 88, and 108 shown in Fig. 1 and the like. Moreover, the controller 121 is connected to various sensors such as an acceleration sensor 124, a seat load sensor 125, a seat position sensor 126, an airbag pressure sensor 127, an occupant position sensor 128, a car-body pressure sensor 129 and the like arranged in a car-body structure. These sensors do not have to be all connected to the controller 121 but this is mere exemplification.

The acceleration sensor 124 is a sensor for detecting rapid deceleration generated in the car body. If the controller 121 recognizes that a detected value of the acceleration sensor 124 is rapid deceleration with not less than a predetermined value, the controller determines that the vehicle had a collision and operates the gas generator 122 so as to inflate and extend the airbag. The car-body pressure sensor 129 is a sensor for detecting a pressure generated when an article collides against the car-body surface. There might be a case in which the controller 121 considers both the detected values of the acceleration sensor 124 and the car-body pressure sensor 129 and determines that the vehicle had a collision and operates the gas generator 122 so as to inflate and extend the airbag.

The seat load sensor 125 is a sensor for detecting a weight of an occupant seated on a vehicle seat. The seat position sensor 126 is a sensor for detecting a longitudinal position of the vehicle seat. The controller 121 determines a weight of the occupant on the basis of an output of the seat load sensor 125 and determines a physical size of the occupant as necessary, considering the output of the seat position sensor 126.

The airbag pressure sensor 127 is a sensor for detecting an internal pressure of the airbag and is a sensor used for determining if the occupant has touched the airbag or not. The occupant position sensor 128 is a sensor constituted by a CCD camera or the like and a sensor used for visually grasping a position of the occupant and determining if the occupant has touched the airbag or not.

First, using Figs. 13(A) and 13(B), a flow from start of inflation and extension of the airbag will be described. As shown in Fig. 13(A), if the airbag starts inflation and extension (S1) by a signal of the controller 121, the controller 121 determines if "the occupant has touched the airbag or not?" (S2). If the occupant has touched the airbag or not is determined on the basis of outputs of the airbag pressure sensor 127 and the occupant position sensor 128, for example. If it is determined that the occupant has not touched the airbag (N), the controller 121 maintains a state of holding the strap (S3). If it is determined that the occupant has touched the airbag (Y), the controller 121 transmits a release signal to release the strap (S4) to the strap holding device 123 and moves to a state of a vent hole open (S5).

Also, as shown in Fig. 13(B), after the start of the airbag inflation and extension (S1), a step of "how much is the occupant's weight?" (S6) may be inserted so as to determine the weight of the occupant and to determine if a release signal is to be transmitted or not to the strap holding device 123. That is because if the weight of the occupant is light, there might be a case in which the internal pressure of the airbag is preferably lowered if the airbag is touched in the initial stage of the airbag inflation and extension or in order to improve the impact absorbing force for the occupant with a light weight. If the weight of the occupant is lighter than a predetermined reference value (a value in a range of 40 to 50 kg, for example), the controller 121 transmits a release signal to release the strap (S4) to the strap holding device 123 so as to move to the state of the vent hole open (S5). Also, if the weight of the occupant is heavier than the predetermined reference value, the controller 121 maintains the state of maintaining the strap (S3). After that, a step of determining if "the occupant has touched the airbag or not?" (S7) may be inserted. If it is determined that the occupant has not touched the airbag (N), the controller 121 maintains the state of holding the strap (S3). Also, if it is determined that the occupant has touched the airbag (Y), the controller 121 transmits a release signal to release the strap (S4) to the strap holding device 123 so as to move to the state of the vent hole open (S5).

The controller 121 might also function as a controller of the gas generator 122 and the strap holding device 123 as shown in Fig. 12. In such a case, control of the gas generator 122 and the strap holding device 123 may be interlocked with each other. That is particularly effective when the operation of the gas generator 122 is changed according to the weight or physical size of the occupant.

As shown in Fig. 14, if the occupant gets on the car (S11), the controller 121 determines the weight of the occupant on the basis of the output of the seat load sensor 125 at the step of "how much is the occupant's weight?" (S12). Then, the controller 121 executes a strap release setting (S13) if the weight of the occupant is light, while the controller executes the strap holding setting (S14) if the weight of the occupant is heavy. At this time, if the weight of the occupant is light, the controller 121 makes setting such that a gas generated amount of the gas generator 122 is reduced (if the gas generator is a two-stage type, only the first gas generator is operated, for example), while if the weight of the occupant is heavy, the controller makes setting such that the gas generated amount of the gas generator 122 is increased (if the gas generator is a two-stage type both the first gas generator and the second gas generator are operated, for example), but since such processing does not directly relate to the present invention, the processing flow is omitted in Fig. 14. The strap release setting (S13) is a setting to process such that the strap of the strap holding device 123 is released if the airbag is inflated and extended, and the strap holding setting (S14) is a setting to process such that the strap of the strap holding device 123 is maintained if the airbag is inflated and extended.

Then, the controller 121 determines at a step of "has a vehicle collision been detected?" (S15, S16) if the vehicle has collided or not on the basis of the outputs of the acceleration sensor 124 and the car-body pressure sensor 129 and if it is determined that the vehicle has collided (Y), the routine goes to a step of start of the airbag inflation and extension (S17, S18). If it is determined that the vehicle has not collided (N), the routine does not go to the subsequent step (S17, S18). If the strap release setting (S13) has been made, that is, if the weight of the occupant is light, the controller 121 executes processing of the strap release (S19) at the same time with the start of the airbag inflation and extension (S17), and the routine goes to the state of the vent hole open (S20). On the other hand, if the strap holding setting (S14) has been made, that is, if the weight of the occupant is heavy, the state of the strap holding (S21) is maintained. In this case, a step to determine if "the occupant has touched the airbag or not?" (S22) may be further inserted. If it is determined that the occupant has not touched the airbag (N), the controller 121 maintains the state of the strap holding (S21), while if it is determined that the occupant has touched the airbag (Y), the controller 121 transmits a release signal to release the strap (S19) to the strap holding device 123, and the routine goes to the state of the vent hole open (S20).

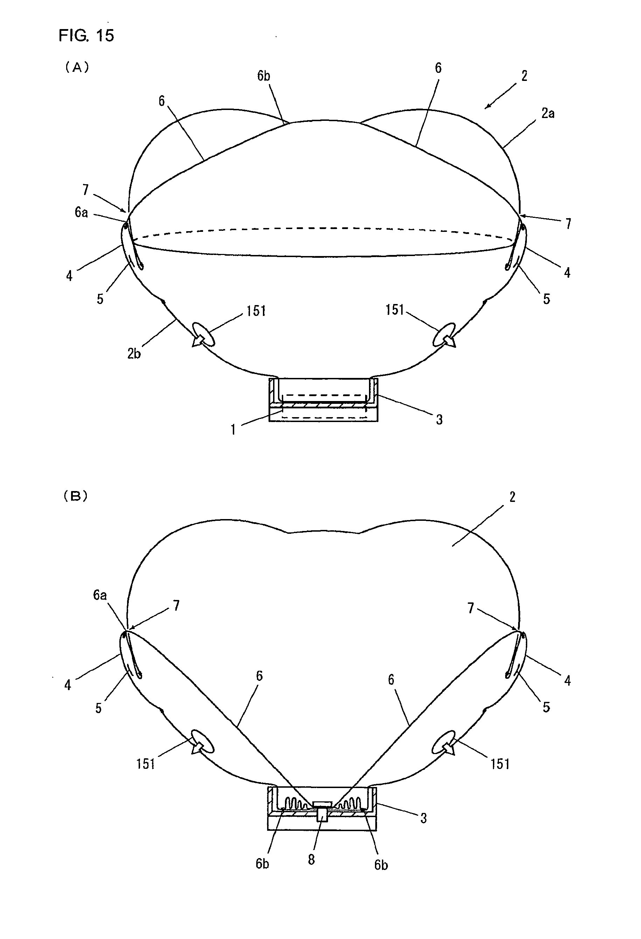

Subsequently, the airbag device in which a second vent hole is disposed in the airbag will be described. Here, Figs. 15 are explanatory diagrams illustrating a fifth embodiment of the airbag device according to the present invention, in which (A) shows a case in which the strap holding device is not provided, and (B) shows a case in which the strap holding device is provided. Specifically, the airbag device shown in Fig. 15(A) shows a case in which second vent holes 151, 151 are formed in the airbag device shown in Fig. 1(A), and the airbag device shown in Fig. 15(B) shows a case in which the second vent holes 151, 151 are formed in the airbag device shown in Fig. 6(A). In Figs. 15(A) and 15(B), the same reference numerals are given to the same components as those in the airbag devices shown in Figs. 1(A) and 6(A), and duplicated description will be omitted.

The airbag device of the fifth embodiment shown in Figs. 15(A) and 15(B) has the second vent hole 151 formed in a rear panel 2b of the airbag 2. By providing the second vent hole 151, the gas in the airbag 2 can be discharged separately from the vent hole 5 in the projection portion 4. Therefore, an effect to reduce pressure loss during inflation and extension of the airbag 2 is low, but the impact absorbing force suitable for the physical size of the occupant can be exerted by controlling opening / closing of the vent hole 5. The second vent hole 151 may be formed in an area where the projection portion 4 and the airbag 2 overlap each other when the projection portion 4 is pulled by the strap 6. In this case, the pressure loss during inflation and extension of the airbag 2 can be further reduced.

If the physical size of the occupant is large or the weight of the occupant is heavy, for example, the internal pressure in the airbag 2 is maintained by having the state in which the vent hole 5 of the projection portion 4 is closed all the time, and if the occupant touches the airbag 2, the gas is discharged from the second vent hole 151 so that the impact on the occupant can be alleviated. Also, if the physical size of the occupant is small or the weight of the occupant is light, the internal pressure in the airbag 2 is lowered by having the state in which the vent hole 5 of the projection portion 4 is opened at the same time as the inflation and extension of the airbag 2 and if the occupant touches the airbag 2, the gas is discharged from both the vent hole 5 and the second vent hole 151 so that the impact on the occupant can be alleviated. As mentioned above, in the fifth embodiment of the present invention, since priority is given to exertion of the impact absorbing force suitable for the physical size of the occupant, the two-stage type gas generator is preferably employed for the gas generator 1, too. For example, if the physical size of the occupant is large or the weight of the occupant is heavy, both the first gas generator and the second gas generator are operated at the same time so as to increase the gas generated amount, while if the physical size of the occupant is small or the weight of the occupant is light, only the first gas generator is operated so as to reduce the gas generated amount so that the internal pressure of the airbag 2 can be adjusted.

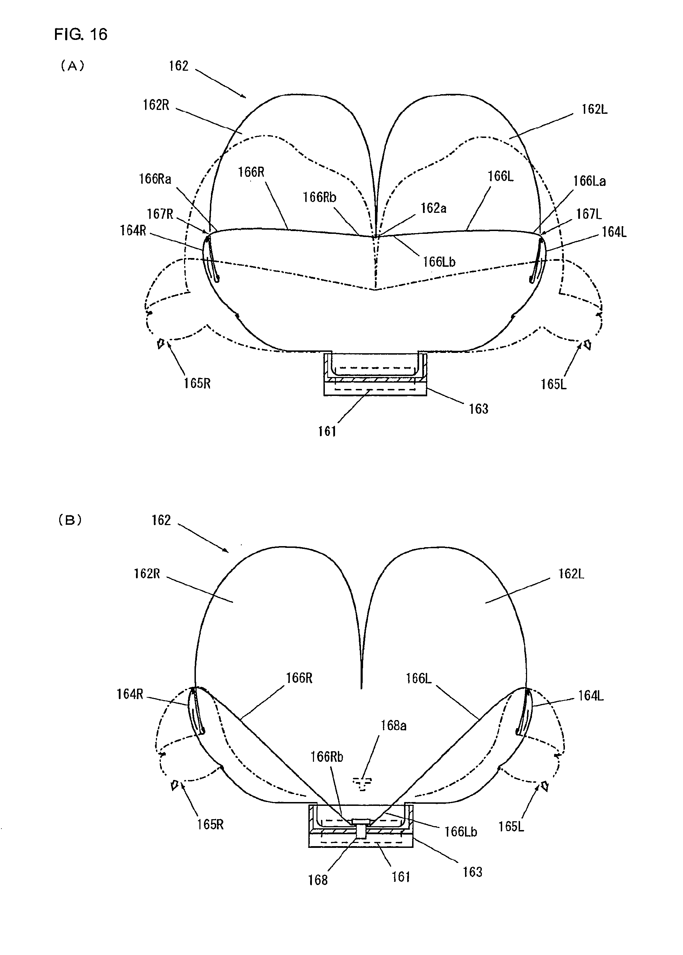

Subsequently, a case in which the airbag device of the present invention is applied to a so-called twin airbag will be described. Figs. 16 are explanatory diagrams illustrating a sixth embodiment of the airbag device according to the present invention, in which (A) shows a case in which the strap holding device is not provided, and (B) shows a case in which the strap holding device is provided. In each figure, a state in which the vent hole is closed is indicated by a solid line, while a state in which the vent hole is opened is shown by a one-dot chain line.

The airbag device shown in Fig. 16(A) is provided with a gas generator 161 for generating gas under a predetermined condition, an airbag 162 connected to the gas generator 161 and inflated and extended, and a retainer 163 for containing the airbag 162, and the airbag 162 has a left airbag section 162L inflated and extended on the left side of the occupant and a right airbag section 162R inflated and extended on the right side of the occupant, in which vent holes 165L and 165R are formed in the left airbag section 162L and the right airbag section 162R, respectively. Specifically, projection portions 164L and 164R forming a portion projecting to the outside on a part of each of the airbag sections 162L and 162R, the vent holes 165L and 165R formed in the projection portions 164L and 164R, straps 166L and 166R with one ends 166La and 166Ra connected to the projection portions 164L and 164R and the other ends 166Lb and 166Rb are connected to the inside of the airbag 162, and insertion holes 167L and 167R for guiding the end portions of the straps 166L and 166R into the inside of the airbag 162 are provided, and the vent holes 165L and 165R are arranged on the projection portions 164L and 164R in an area where the projection portions 164L and 164R and the airbag 162 do not overlap each other when the projection portions 164L and 164R are pulled by the straps 166L and 166R. The other ends 166Lb and 166Rb of the straps 166L and 166R are sewn to a joint portion 162a of each of the airbag sections 162L and 162R. The other ends 166Lb and 166Rb of the straps 166L and 166R are not limited to the illustrated portions but may be connected to the vicinity of the top portions of the airbag sections 162L and 162R, respectively.

As shown by the solid line in Fig. 16(A), when the airbag 162 is inflated and extended, each of the projection portions 164L and 164R is pulled by each of the straps 166L and 166R and maintained in a state in which inflation is suppressed, and the vent holes 165L and 165R are in a closed state. Also, as shown by the one-dot chain line in Fig. 16(A), if an occupant (not shown) touches the airbag 162, tension of the straps 166L and 166R is lowered, the internal pressure of the projection portions 164L and 164R is raised by the gas flowing into the inside and the projection portions stand on the surfaces of the airbag sections 162L and 162R, and the capacity of the airbag 162 can be increased. Moreover, if the pressure in the projection portions 164L and 164R is increased, the vent holes 165L and 165R are opened, and the gas in the airbag 162 can be discharged.

The airbag device shown in Fig. 16(B) shows a case in which the other ends 166Lb and 166Rb of the straps 166L and 166R are connected to the strap holding device 168 that can keep the lengths of the straps 166L and 166R constant and can release the straps 166L and 166R. Since the other portions have basically the same configuration as those shown in Fig. 16(A), detailed description will be omitted.

If the vent holes 165L and 165R are to be closed by suppressing inflation of the projection portions 164L and 164R, it is only necessary not to operate the strap holding device 168 as shown by the solid line. If the vent holes 165L and 165R are to be opened by promoting inflation of the projection portions 164L and 164R, it is only necessary to operate the strap holding device 168 so as to release a cap 168a and to release the straps 166L and 166R as shown by the one-dot chain line. In this case, the straps 166L and 166R lose tension, the internal pressure of the projection portions 164L and 164R is increased by the inflow gas and the projection portions stand on the surface of the airbag sections 162L and 162R, respectively, and the capacity of the airbag 162 can be increased. If the pressure inside the projection portions 164L and 164R is further increased, the vent holes 165L and 165R are opened, and the gas in the airbag 162 can be discharged.

The present invention is not limited to the above-mentioned embodiments, but (1) the present invention can be applied to all the airbags having a vent hole and can be also applied to the curtain airbag device, knee airbag device, pedestrian airbag device and the like; (2) an airbag or an airbag device obtained by combining each of the embodiments as appropriate may be employed; and (3) it is needless to say that various changes in a range not departing from the gist of the present invention is possible such that the projection portion may have a shape enlarged along the shape of the airbag.

### Brief Description of Drawings

[Fig. 1] Figs. 1 are explanatory diagrams illustrating a first embodiment of an airbag device according to the present invention, in which (A) shows a state in which a vent hole is closed, and (B) shows a state in which the vent hole is opened.
[Fig. 2] Figs. 2 are enlarged views of a projection portion, in which (A) shows a state in which a vent hole is opened, and (B) shows a state in which the vent hole is closed.
[Fig. 3] Figs. 3 are diagrams illustrating variations of the first embodiment, in which (A) shows a first variation, (B) shows a second variation, and (C) shows a third variation.
[Fig. 4] Fig. 4 is a side sectional view illustrating a second embodiment of the airbag device according to the present invention.
[Fig. 5] Figs. 5 are outline sectional views illustrating a strap holding device, in which (A) shows a pressurization type and (B) shows a piston type.
[Fig. 6] Figs. 6 are explanatory diagrams illustrating an action of the strap holding device if an end portion of a strap is fixed to an airbag, in which (A) shows a state in which the vent hole is closed, and (B) shows a state in which the vent hole is opened.
[Fig. 7] Figs. 7 are explanatory diagrams illustrating an action of the strap holding device if the end portion of the strap is connected to the strap holding device, in which (A) shows a state in which the vent hole is closed, and (B) shows a state in which the vent hole is opened.
[Fig. 8] Figs. 8 are explanatory diagrams illustrating a third embodiment of an airbag device according to the present invention, in which (A) is a rear view and (B) is a side sectional view.
[Fig. 9] Figs. 9 are views illustrating a variation of the third embodiment, in which (A) is a rear view and (B) is a side sectional view.
[Fig. 10] Figs. 10 are outline sectional views illustrating a fourth embodiment of an airbag device according to the present invention, in which (A) shows a state in which the vent hole is closed, and (B) shows a state in which the vent hole is opened.
[Fig. 11] Figs. 11 are diagrams illustrating a variation of the fourth embodiment, in which (A) shows a state in which the vent hole is closed, and (B) shows a state in which the vent hole is opened.
[Fig. 12] Fig. 12 is a diagram illustrating a configuration of a controller of an airbag device according to the present invention.
[Fig. 13] Figs. 13 are flowcharts illustrating an action of the controller if a gas generator of the airbag device has a single-stage configuration, in which (A) is a flowchart of a case in which the vent hole is opened if an occupant touches the airbag, and (B) is a flowchart of a case in which the vent hole is opened / closed according to a weight of the occupant.
[Fig. 14] Fig. 14 is a flowchart of a case in which an operation of the gas generator of the airbag device is performed in conjunction with an operation of the strap holding device.
[Fig. 15] Figs. 15 are explanatory diagrams illustrating a fifth embodiment of an airbag device according to the present invention, in which (A) shows a case in which a strap holding device is not provided, and (B) shows a case in which the strap holding device is provided.
[Fig. 16] Figs. 16 are explanatory diagrams illustrating a sixth embodiment of an airbag device according to the present invention, in which (A) shows a case in which a strap holding device is not provided, and (B) shows a case in which the strap holding device is provided.

## Claims

1. An airbag inflated and extended by supply of gas into the inside, provided with a projection portion forming a portion projecting to the outside on a part of said airbag, a vent hole formed in the projection portion, and a strap with one end connected to said projection portion and the other end connected to a constituent component or a mounting component of said airbag, **characterized in that** said vent hole is arranged in said projection portion in an area where said projection portion and said airbag do not overlap each other when said projection portion is pulled by said strap.

2. The airbag according to claim 1, wherein said vent hole is configured such that the hole is closed by tension of said strap and opened by a pressure of gas flowing into said projection portion when said strap is loosened.

3. The airbag according to claim 2, wherein said vent hole is formed on a face opposite the area where said projection portion and said airbag overlap each other when said projection portion is pulled by said strap.

4. The airbag according to claim 2, wherein said vent hole is a cut-out portion formed in a pulling direction of said strap.

5. The airbag according to claim 1, wherein said projection portion is configured to stand up upon inflow of gas from said airbag so as to increase a capacity of said airbag.

6. The airbag according to claim 1, wherein said projection portion has a first panel in which said vent hole is formed and a second panel connected to the first panel, and the first panel and the second panel are sewn to a mounting hole formed in said airbag.

7. The airbag according to claim 1, wherein an insertion hole for guiding the other end of said strap into the inside of said airbag is formed in an outer face of said airbag.

8. The airbag according to claim 1, wherein an insertion portion for guiding the other end of said strap is formed in an inner face of said airbag.

9. The airbag according to claim 1, wherein said airbag has a left airbag section inflated and extended on the left side of an occupant and a right airbag section inflated and extended on the right side of the occupant, and said vent hole is formed in each of the left airbag section and the right airbag section.

10. The airbag according to claim 1, wherein said airbag has a second vent hole formed at a location different from said vent hole.

11. The airbag according to claim 1, wherein said constituent component is any of an outer panel forming said airbag, a tether arranged in said airbag or an inner panel arranged in said airbag.

12. The airbag according to claim 1, wherein said mounting component is any of a retainer for containing said airbag, a back plate connected to the retainer or a cover connected to said retainer.

13. An airbag device provided with a gas generator for generating gas under a predetermined condition, an airbag connected to the gas generator and inflated and extended, and a retainer for containing the airbag, **characterized in that** said airbag is an airbag according to any one of claims 1 to 12.

14. The airbag device according to claim 13, further comprising a strap holding device that can keep a length of said strap constant and can release said strap and a controller for transmitting a release signal to release said strap to the strap holding device.

15. The airbag device according to claim 14, wherein said controller transmits said release signal when said gas generator is operated if an occupant touches said airbag or a weight of the occupant is lighter than a predetermined reference value.

16. The airbag device according to claim 14, wherein said controller does not transmit said release signal if said airbag has said second vent hole and a weight of an occupant is heavier than a predetermined reference value.

17. The airbag device according to claim 14, wherein said controller transmits said release signal substantially at the same time if said gas generator has a first gas generator and a second gas generator and only first gas generator is operated.

18. The airbag device according to claim 14, wherein said controller does not transmit said release signal if said airbag has said second vent hole, said gas generator has a first gas generator and a second gas generator, and both the first gas generator and the second gas generator are operated.

19. The airbag device according to claim 14, wherein said strap holding device comprises a cap capable of engagement with an engagement hole formed in said strap, a holder capable of fixing the cap, a releasing device connected to the holder and capable of releasing the fixation of said cap, and a connector for receiving a release signal to operate the releasing device from said controller.

20. The airbag device according to claim 19, wherein said releasing device is constituted by a gas generator.
